# FASCICULE DE BREVET EUROPEEN

(11) **EP 0 520 859 B1**
(45) Date de publication et mention de la délivrance du brevet: **23.08.1995**
(21) Numéro de dépôt: 92401667.8
(22) Date de dépôt: 16.06.1992
(51) Int. Cl.: H01Q 3/02, H02H 7/085

(54) **Procédé et dispositif de mesure d'efforts liés au vent sur un système tournant**
Verfahren und Vorrichtung zur Messung von Windbeanspruchungen an einem Drehsystem
Method and device for measuring of wind forces on a rotating system

(30) Priorité: 27.06.1991 FR 9108012
(43) Date de publication de la demande: 30.12.1992
(73) Titulaire: THOMSON-CSF, 75008 Paris (FR)
(72) Inventeur: Bizot, Alain, F-92045 Paris la Défense (FR); Peyrat, André, F-92045 Paris la Défense (FR)
(74) Mandataire: Benoit, Monique

(56) Documents cités:
- EP-A- 0 324 281
- FR-A- 2 541 639
- US-A- 4 117 408
- US-A- 4 749 924
- SIEMENS POWER ENGINEERING. vol. 6, no. 2, Mars 1984, BERLIN DE, pages 98 - 101, DÜLL ET KOHLHAS 'New Antenna Drives'

## Description

La présente invention concerne un procédé et un dispositif de mesure d'efforts liés au vent sur un système tournant, notamment pour un radar à antennes tournantes.

Un domaine particulier d'applications de l'invention concerne les radars implantés au sol, et utilisés pour la détection de cibles mobiles de toutes natures, ceux-ci comportant un système d'antennes tournant dépourvu de protection contre les effets du vent. Pour de tels radars, l'effet du vent a deux conséquences principales :
- Les forces dues au vent et subies par le système sont telles qu'il est souhaitable de cesser l'entraînement en rotation des antennes au-delà d'une certaine vitesse de vent, typiquement entre 120 et 130 km/h, ceci de manière à éviter tout risque de détérioration et d'usure prématurée au niveau du plateau tournant supportant les antennes et de la motorisation ;
- Même en-deçà de cette limite de la vitesse du vent, il existe une déformation, ou torsion, du système d'antennes qui modifie leurs caractéristiques de rayonnement et entraîne une erreur sur la mesure de l'angle azimutal des cibles détectées.

Il est connu de mesurer en permanence la vitesse du vent grâce à des capteurs anémométriques qui déclenchent l'arrêt des moteurs d'entraînement du plateau tournant et leur désaccouplage dès que la limite prescrite est atteinte, pour permettre au système d'antennes de s'orienter librement au gré du vent. Cependant, la mesure effectuée par ces capteurs est généralement faussée par la proximité des antennes. De plus, l'adjonction de ces capteurs situés en extérieur et reliés tout naturellement à l'électronique du radar, augmente de manière significative le risque de propagation de la foudre à l'intérieur de celle-ci

Pour ce qui concerne la contrainte liée à la déformation du système d'antennes, les spécialistes ont été amenés soit à protéger le système au moyen de radômes perméables aux ondes radar et étanches à la pluie et au vent, soit à renforcer les structures mécaniques des antennes. Cependant, aucune de ces deux solutions n'est pleinement satisfaisante, la première, parce que le radôme apporte nécessairement des perturbations sur le rayonnement des antennes, la deuxième parce qu'elle est incompatible avec les impératifs de poids et de coûts.

Un premier objectif de l'invention est de proposer un procédé simple de mesure, par exemple permanente, des efforts liés au vent qui ne comporte pas les inconvénients précités.

Un second objectif de l'invention est d'utiliser cette mesure pour corriger l'erreur faite sur la mesure de l'angle azimutal de la cible détectée, ainsi que pour déclencher l'arrêt des moteurs d'entraînement et leur désaccouplage lorsque la vitesse limite du vent est atteinte.

Les études de la Demanderesse ont montré que la puissance fournie par la motorisation est une fonction des efforts liés au vent, et qu'une mesure de cette puissance, ou d'une grandeur caractéristique de cette puissance constituerait de ce fait une mesure de ces efforts.

Plus précisément, l'invention concerne un procédé de mesure d'efforts liés au vent et affectant un système tournant entraîné en rotation par un moteur, consistant à :
- mesurer une grandeur caractéristique de la puissance fournie par le moteur ;
- calculer l'écart entre la grandeur caractéristique maximum et la grandeur caractéristique minimum sur au moins un tour du système tournant, cet écart constituant une mesure des efforts liés au vent.

L'invention concerne également un dispositif de mesure d'efforts liés au vent pour un système tournant entraîné en rotation par au moins un moteur commandé par des moyens de commande, le dispositif étant caractérisé en ce qu'il comporte :
- des moyens de mesure d'une grandeur caractéristique de la puissance fournie par le moteur ;
- des moyens de calcul de l'écart maximum existant sur la mesure de ladite grandeur caractéristique sur au moins un tour du système tournant.

L'invention, ainsi que ses avantages, seront mieux compris au vu de la description suivante, en référence aux figures annexées :
- la figure 1 représente la puissance fournie par le moteur d'entraînement en fonction de l'angle de pointage d'un système comportant une antenne dans les cas où le vent est nul, faible ou fort ;
- la figure 2 illustre la relation reliant l'écart maximum de puissance requise sur un tour de l'antenne à la vitesse du vent ;
- les figures 3a à 3e montrent respectivement les variations de la puissance instantanée fournie par la motorisation en fonction de l'angle de pointage de l'antenne, l'erreur d'angle commise sur la mesure de l'angle azimutal d'une cible détectée, la courbe de compensation théorique de cette erreur, ainsi que les courbes de surcompensation et de sous-compensation.
- la figure 4 est un schéma bloc d'une réalisation possible d'un dispositif de mesure d'efforts liés au vent selon l'invention.

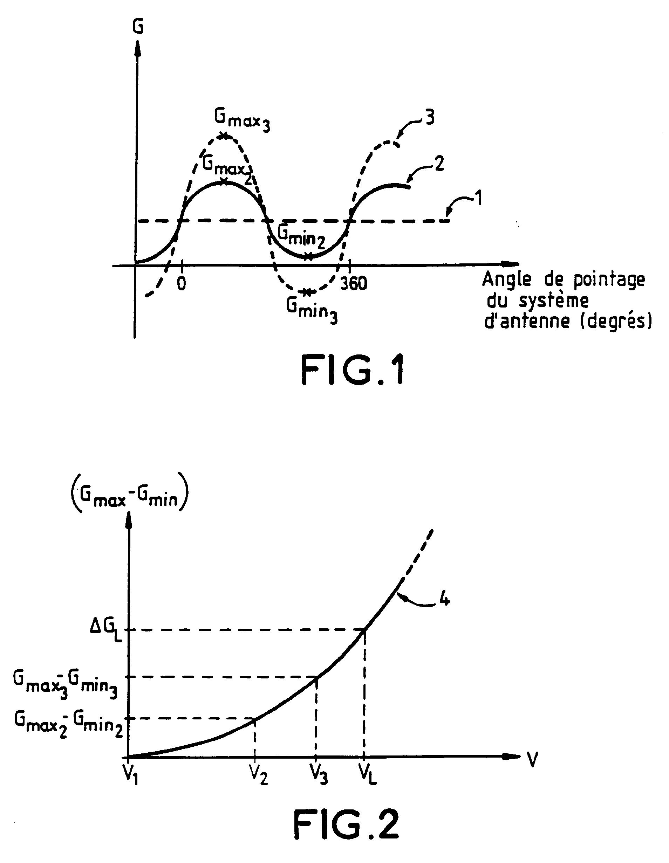

La figure 1 est le résultat d'une étude de la Demanderesse représentant la puissance fournie par le moteur d'entraînement d'un système comportant une antenne, en fonction de l'angle de pointage de ce système d'antenne, ceci dans trois configurations différentes au niveau de la vitesse du vent :

Dans le cas de la courbe 1, le vent est nul. En conséquence, la puissance requise pour entraîner en rotation l'antenne à la vitesse de rotation spécifiée est constante, quelle que soit la direction dans laquelle est pointé le système d'antenne.

Par contre, lorsque le vent souffle, il freine ou accélère le mouvement du système d'antenne selon l'orientation de celui-ci par rapport à la direction du vent. Il en résulte, suivant l'angle entre la direction du vent et la direction de pointage du système d'antenne, une variation de la puissance requise pour assurer la rotation. Cette variation de puissance est plus ou moins grande selon la force du vent, comme le montrent les courbes 2 et 3 de la figure 1 qui représentent respectivement les variations de puissance lorsque le vent est faible et lorsque le vent est fort.

Les courbes 2 et 3 présentent respectivement des maxima Pₘₐₓ₂ et Pₘₐₓ₃ et des minima Pₘᵢₙ₂ et Pₘᵢₙ₃ suivant que le sens du vent est opposé à la direction de pointage du système d'antenne ou non.

Pour chaque courbe, la différence entre la puissance maximale et la puissance minimale fournie sur un tour est fonction de la vitesse du vent, comme le montre la courbe 4 de la figure 2 sur laquelle on a représenté les vitesses V₁, V₂, et V₃ correspondant respectivement aux courbes 1, 2 et 3 de la figure 1.

L'invention propose ainsi un procédé très simple de mesure des efforts liés au vent qui utilise le système tournant lui-même sans ajout de capteurs extérieurs. Dans le cas où la motorisation utilisée pour entraîner le système tournant est électrique, une simple mesure du courant utilisé par cette motorisation, puis un calcul de l'écart entre le courant maximal et le courant minimal sur un tour du système d'antenne sont à effectuer. Si on appelle φ le déphasage entre le courant dans un moteur et la tension aux bornes de celui-ci, une mesure du cosφ en lieu et place de la mesure du courant peut également être effectuée.

Si la motorisation utilisée est hydraulique, la mesure de puissance peut être remplacée par une mesure des différences de pression du fluide hydraulique utilisé.

La mesure d'efforts liés au vent en passant par la mesure d'une grandeur caractéristique G qui peut être, comme nous l'avons dit précédemment, la puissance des moteurs, le courant, le cosφ ou encore la pression, présente un grand intérêt dans les applications que l'on peut en faire :

Pour déterminer l'instant pour lequel la vitesse limite V_{L} du vent est atteinte, il suffit de comparer la différence ΔG entre la grandeur caractéristique maximale et la grandeur caractéristique minimale fournies sur un tour de système d'antenne à une valeur seuil ΔG_{L} caractéristique de V_{L} (voir figure 2).

Lorsque les deux valeurs ΔG et ΔG_{L} sont égales, il faut alors arrêter la motorisation pendant un temps prédéterminé, et laisser le système d'antenne s'orienter librement.

Le second intérêt de la mesure de la grandeur caractéristique instantanée réside dans la possibilité de corriger l'erreur faite sur la mesure de l'angle azimutal de la cible détectée :

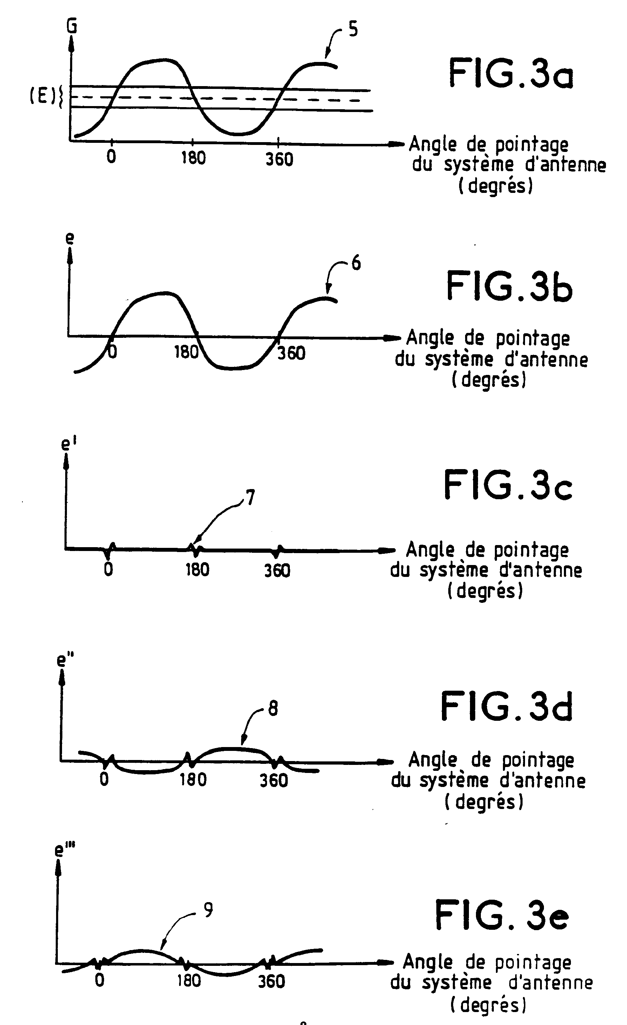

La figure 3a représente en 5 les variations de la grandeur caractéristique en fonction de l'angle de pointage du système d'antenne exprimé en degrés, dans des conditions de vent particulières.

La ligne en pointillés illustre le cas pour lequel le vent est nul. La figure 3b représente en 6 l'erreur d'angle e due à la torsion en fonction de l'angle de pointage du système d'antenne. Cette erreur est nulle lorsque la valeur de G est égale à celle que l'on aurait si le vent était nul, ce qui correspond aux angles de pointage 0°, 180° et 360° dans ce cas précis. La figure 3c illustre, par la courbe 7, la compensation de l'erreur d'angle précédente. Les valeurs non nulles en 0°, 180° et 360° viennent du fait que, dans la pratique, on peut se passer de faire une compensation lorsque la grandeur caractéristique G mesurée reste au voisinage (E) de celle correspondant au vent nul (voir figure 3a).

En outre, la connaissance pratique de la relation liant G à l'erreur d'angle e est établie suite à des calculs, simulations, essais en soufflerie et mesures sur le terrain, qui n'en donnent qu'une estimation imparfaite. En conséquence, on obtient rarement la compensation de la figure 3c, mais plutôt soit une surcompensation illustrée par la courbe 8 de la figure 3d, soit une sous-compensation comme le montre la courbe 9 de la figure 3e.

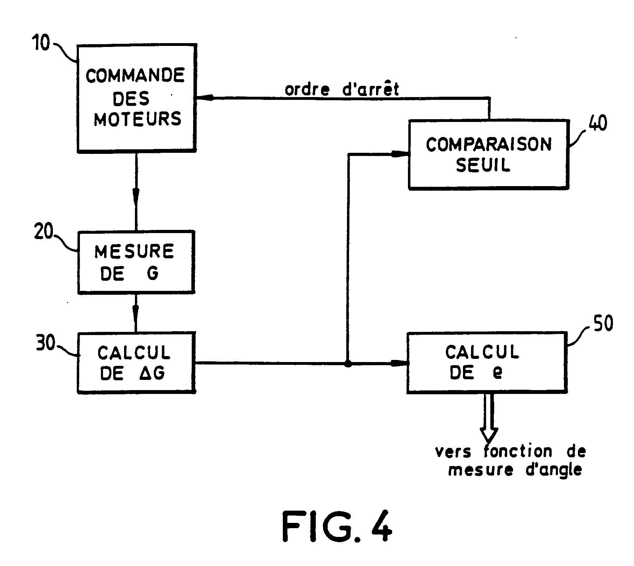

La figure 4 montre une réalisation possible, sous forme de schéma-blocs, d'un dispositif de mesure d'efforts liés au vent pour un système tournant. Le système tournant considéré comporte des moyens de commande 10 d'un système de motorisation comprenant un ou plusieurs moteurs. Le dispositif selon l'invention comporte des moyens de mesure 20 d'une grandeur G caractéristique de la puissance fournie par le système de motorisation. Les différentes mesures effectuées par les moyens de mesure 20 sont alors fournies à des moyens de calcul 30 de l'écart maximum ΔG existant sur les mesure de G sur au moins un tour. Si cet écart est représentatif d'une vitesse de vent supérieure à la vitesse tolérée par le système, le dispositif selon l'invention prévoit une sécurité par l'utilisation de moyens de comparaison 40 de l'écart ΔG avec l'écart limite ΔG_{L} qui envoient un ordre d'arrêt aux moyens de commande 10 du système de motorisation. Le dispositif prévoit également le calcul de l'erreur e effectuée par un dispositif 50, ce calcul pouvant servir, comme le montre la figure 4, à corriger la fonction de mesure d'angle d'un système radar.

L'invention et ses applications ont été décrites pour un système comportant une antenne, ce qui ne constitue en rien une limitation. En effet, l'invention peut s'appliquer à tout système tournant comme par exemple dans le cas d'un radar secondaire pour lequel l'antenne est placée au-dessus de l'antenne du radar primaire, cette dernière lui servant ainsi de support. Bien entendu, les courbes représentant la grandeur caractéristique G choisie et l'erreur d'angle azimutal en fonction de l'angle de pointage du système d'antennes ont une allure plus complexe que dans le cas d'une seule antenne, et la courbe reliant l'erreur d'angle à la position angulaire du système d'antennes est généralement différente de celle qui correspond à la puissance fournie à l'ensemble des deux antennes. Seule une compensation partielle est alors possible pour chacune des deux antennes.

## Revendications

1. Procédé de mesure d'efforts liés au vent et affectant un système tournant entraîné en rotation par au moins un moteur, le procédé étant caractérisé en ce qu'il consiste à :
- mesurer une grandeur caractéristique de la puissance fournie par le moteur ;
- calculer l'écart entre la grandeur caractéristique maximum et la grandeur caractéristique minimum fournies sur au moins un tour du système tournant, cet écart constituant la mesure des efforts liés au vent.

2. Procédé de mesure d'efforts liés au vent selon la revendication 1, caractérisé en ce que ledit moteur est électrique et en ce que la grandeur caractéristique est le courant consommé par le moteur.

3. Procédé de mesure d'efforts liés au vent selon la revendication 1, caractérisé en ce que ledit moteur est électrique et en ce que la grandeur caractéristique est le cosinus du déphasage entre le courant dans le moteur et la tension au bornes de ce moteur.

4. Procédé de mesure d'efforts liés au vent selon la revendication 1, caractérisé en ce que ledit moteur est hydraulique et en ce que la grandeur caractéristique est la pression.

5. Procédé de mesure d'efforts liés au vent selon l'une quelconque des revendications précédentes, caractérisé en ce qu'il comporte en outre une étape de comparaison de ladite mesure avec une valeur seuil caractérisant la vitesse limite du vent au-delà de laquelle il faut arrêter le moteur et désolidariser le système tournant.

6. Procédé de mesure d'efforts liés au vent selon l'une quelconque des revendications précédentes, caractérisé en ce qu'il comporte en outre une étape de compensation de l'erreur d'angle azimutal.

7. Procédé de mesure d'efforts liés au vent selon l'une quelconque des revendications précédentes, caractérisé en ce que la mesure de la grandeur caractéristique est effectuée en permanence.

8. Dispositif de mesure d'efforts liés au vent pour un système tournant entraîné en rotation par au moins un moteur commandé par des moyens de commande (10), le dispositif étant caractérisé en ce qu'il comporte :
- des moyens de mesure (20) d'une grandeur caractéristique de la puissance fournie par le moteur ;
- des moyens de calcul (30) de l'écart maximum existant pour la mesure de ladite grandeur caractéristique sur au moins un tour du système tournant.

9. Dispositif de mesure d'efforts liés au vent selon la revendication 8, caractérisé en ce qu'il comporte en outre des moyens de comparaison (40) de l'écart maximum avec une valeur seuil pour envoyer un ordre d'arrêt aux moyens de commande (10) si cet écart est supérieur à cette valeur seuil.

10. Dispositif de mesure d'efforts liés au vent selon l'une des revendications 8 ou 9, caractérisé en ce qu'il comporte en outre des moyens de calcul (50) de l'erreur de pointage du système tournant.

## Patentansprüche

1. Verfahren zur Messung von Windkräften, die auf eine von einem Motor in Drehung versetzte Anlage wirken, wobei dieses Verfahren darin besteht,
- eine die von den Motor gelieferte Leistung kennzeichnende Größe zu messen,
- die Abweichung zwischen der maximalen und der minimalen kennnzeichnenden Größe über mindestens einen Umlauf der drehenden Anlage zu berechnen, wobei diese Abweichung ein Maß für die Windkräfte bildet.

2. Verfahren zur Messung der Windkräfte nach Anspruch 1, dadurch gekennzeichnet, daß der Motor ein Elektromotor ist und daß die kennzeichnende Größe der von dem Motor aufgenommene Strom ist.

3. Verfahren zur Messung der Windkräfte nach Anspruch 1, dadurch gekennzeichnet, daß der Motor ein Elektromotor ist und daß die kennzeichnende Größe der Kosinus der Phasenverschiebung zwischen dem vom Motor aufgenommenen Strom und der Spannung an den Klemmen dieses Motors ist.

4. Verfahren zur Messung der Windkräfte nach Anspruch 1, dadurch gekennzeichnet, daß der Motor ein Hydraulikmotor ist und daß die kennzeichnende Größe der Fluiddruck ist.

5. Verfahren zur Messung der Windkräfte nach einem beliebigen der vorhergehenden Ansprüche, dadurch gekennzeichnet, daß außerdem ein Verfahrensschritt des Vergleichs des Meßwerts mit einem für die höchstzulässige Windgeschwindigkeit charakteristischen Schwellwert vorgesehen ist, bei dem der Motor ausgeschaltet und die drehende Anlage entkoppelt werden soll.

6. Verfahren zur Messung der Windkräfte nach einem beliebigen der vorhergehenden Ansprüche, dadurch gekennzeichnet, daß außerdem ein Verfahrensschritt der Kompensation des Fehlers bei der Messung des Azimutwinkels vorgesehen ist.

7. Verfahren zur Messung der Windkräfte nach einem beliebigen der vorhergehenden Ansprüche, dadurch gekennzeichnet, daß die Messung der kennzeichnenden Größe permanent erfolgt.

8. Vorrichtung zur Messung der Windkräfte für eine von mindestens einem durch Steuermittel (10) gesteuerten Motor in Drehung versetzte Anlage, dadurch gekennzeichnet, daß
- Mittel (20) zur Messung einer die vom Motor gelieferte Leistung kennzeichnenden Größe,
- und Mittel (30) zur Berechnung der maximalen Abweichung zwischen den Messungen der kennzeichnenden Größe über mindestens einen Umlauf der drehenden Anlage vorgesehen sind.

9. Vorrichtung zur Messung der Windkräfte nach Anspruch 8, dadurch gekennzeichnet, daß sie außerdem Mittel (40) zum Vergleich der maximalen Abweichung mit einem Schwellwert aufweist, um einen Anhaltebefehl an die Steuermittel (10) zu senden, wenn diese Abweichung diesen Schwellwert übersteigt.

10. Vorrichtung zur Messung der Windkräfte nach einem der Ansprüche 8 oder 9, dadurch gekennzeichnet, daß sie außerdem Mittel (50) zur Berechnung des Peilfehlers der drehenden Anlage enthält.

## Claims

1. Method of measuring wind-related forces affecting a rotating system driven in rotation by at least one motor, the method being characterized in that it consists in:
- measuring a magnitude which is characteristic of the power supplied by the motor;
- calculating the difference between the maximum characteristic magnitude and the minimum characteristic magnitude which are supplied over at least one revolution of the rotating system, this difference constituting the measurement of the wind-related forces.

2. Method of measuring wind-related forces according to Claim 1, characterized in that the said motor is electric and in that the characteristic magnitude is the current consumed by the motor.

3. Method of measuring wind-related forces according to Claim 1, characterized in that the said motor is electric and in that the characteristic magnitude is the cosine of the phase shift between the current in the motor and the voltage at the terminals of this motor.

4. Method of measuring wind-related forces according to Claim 1, characterized in that the said motor is hydraulic and in that the characteristic magnitude is pressure.

5. Method of measuring wind-related forces according to any one of the preceding claims, characterized in that it further includes a step of comparison of the said measurement with a threshold value characterizing the limit speed of the wind beyond which it is necessary to stop the motor and disengage the rotating system.

6. Method of measuring wind-related forces according to any one of the preceding claims, characterized in that it further includes a step of compensating for the azimuthal angle error.

7. Method of measuring wind-related forces according to any one of the preceding claims, characterized in that the measurement of the characteristic magnitude is performed continuously.

8. Device for measuring wind-related forces for a rotating system driven in rotation by at least one motor controlled by control means (10), the device being characterized in that it includes:
- means (20) for measuring a magnitude which is characteristic of the power supplied by the motor;
- means (30) for calculating the maximum existing difference for measuring the said characteristic magnitude over at least one revolution of the rotating system.

9. Device for measuring wind-related forces according to Claim 8, characterized in that it further includes means (40) for comparing the maximum difference with a threshold value in order to send a stop command to the control means (10) if this difference is greater than this threshold value.

10. Device for measuring wind-related forces according to one of Claims 8 and 9, characterized in that it further includes means (50) for calculating the aiming error of the rotating system.
